# EUROPÄISCHE PATENTSCHRIFT

(11) **EP 1 695 429 B1**
(45) Veröffentlichungstag und Bekanntmachung des Hinweises auf die Patenterteilung: **08.06.2011**
(21) Anmeldenummer: 04804745.0
(22) Anmeldetag: 09.12.2004
(51) Int. Cl.: H02K 1/27

(54) **ELEKTRISCHE MASCHINE**
ELECTRIC MACHINE
MACHINE ELECTRIQUE

(30) Priorität: 09.12.2003 DE 10357502
(43) Veröffentlichungstag der Anmeldung: 30.08.2006
(73) Patentinhaber: BSH Bosch und Siemens Hausgeräte GmbH, 81739 München (DE)
(72) Erfinder: DE FILIPPIS, Pietro, I-20124 Milano (IT); ABEL, Falko, 93089 Aufhausen (DE); KALAVSKY, Michal, 0411 Kosice (SK)
(86) Internationale Anmeldenummer: PCT/EP2004/053371
(87) Internationale Veröffentlichungsnummer: WO 2005/060074

(56) Entgegenhaltungen:
- EP-A- 1 067 656
- US-A- 4 139 790
- US-A1- 2002 070 619
- PATENT ABSTRACTS OF JAPAN Bd. 2003, Nr. 07, 3. Juli 2003 (2003-07-03) -& JP 2003 088071 A (TOSHIBA CORP), 20. März 2003 (2003-03-20)
- PATENT ABSTRACTS OF JAPAN Bd. 1998, Nr. 03, 27. Februar 1998 (1998-02-27) -& JP 09 294344 A (MEIDENSHA CORP), 11. November 1997 (1997-11-11)
- PATENT ABSTRACTS OF JAPAN Bd. 1999, Nr. 13, 30. November 1999 (1999-11-30) -& JP 11 220846 A (HITACHI LTD), 10. August 1999 (1999-08-10)
- PATENT ABSTRACTS OF JAPAN Bd. 1999, Nr. 09, 30. Juli 1999 (1999-07-30) -& JP 11 098792 A (MATSUSHITA ELECTRIC IND CO LTD), 9. April 1999 (1999-04-09)
- PATENT ABSTRACTS OF JAPAN Bd. 1998, Nr. 05, 30. April 1998 (1998-04-30) -& JP 10 004643 A (AICHI EMERSON ELECTRIC CO LTD), 6. Januar 1998 (1998-01-06)
- KAB-JAE LEE ET AL: "Bridge optimization of interior permanent magnet motor for hybrid electric vehicle" DIGEST OF INTERMAG 2003. PROGRAM OF THE 2003 IEEE INTERNATIONAL MAGNETICS CONFERENCE. BOSTON, MA, MARCH 30 - APRIL 3, 2003, IEEE INTERNATIONAL MAGNETICS CONFERENCE, NEW YORK, NY : IEEE, US, 28. März 2003 (2003-03-28), Seiten GQ-7, XP010665150 ISBN: 0-7803-7647-1
- KOGURE H ET AL: "Magnet configurations and current control for high torque to current ratio in interior permanent magnet synchronous motors" ELECTRIC MACHINES AND DRIVES CONFERENCE, 2003. IEMDC'03. IEEE INTERNATIONAL JUNE 1-4, 2003, PISCATAWAY, NJ, USA,IEEE, Bd. 1, 1. Juni 2003 (2003-06-01), Seiten 353-359, XP010644449 ISBN: 0-7803-7817-2

## Beschreibung

Die vorliegende Erfindung betrifft eine elektrische Maschine, insbesondere einen bürstenlosen Gleichstrommotor, mit einem mit stromführenden Wicklungen versehenen Stator und einem wenigstens teilweise magnetisierbaren Rotor, der in Umfangsrichtung mit einer Vielzahl von Permanentmagneten bestückt ist, die jeweils in eine Magnetaufnahme zwischen Umfangsfläche und Welle des Rotors derart eingebettet sind, dass die Permanentmagnete in radialer Richtung vollständig von der Umfangsfläche des Rotors umfasst sind.

Eine solche Maschine arbeitet, indem die Wicklungen in einem vorgegebenen zeitlichen Muster so mit Spannungen beaufschlagt werden, dass die dadurch in den Wicklungen auftretenden Ströme ein rotierendes Magnetfeld erzeugen, in dem der Rotor sich auszurichten versucht und so die Welle antreibt, oder indem der über die Welle von außen angetriebene Rotor durch das Magnetfeld der rotierenden Permanentmagneten in den Wicklungen des Stators oszillierende Ströme induziert.

Damit sich die Permanentmagnete bei hohen Drehzahlen nicht von dem Rotor lösen können, sind sie in den Rotor eingebettet und in radialer Richtung vollständig von dem Rotoreisen umfasst. Auf diese Weise entsteht ein geschlossener magnetischer Kreis zwischen den Polen der Permanentmagneten über das Rotoreisen, wodurch der magnetische Fluss zwischen Rotor und Stator verringert und somit der Wirkungsgrad der elektrischen Maschine reduziert wird. Aus Dokument US 2002/0145352 A1 ist eine solche elektrische Maschine mit reduziertem Rastmoment offenbart.

Aufgabe der vorliegenden Erfindung ist, eine kostengünstige elektrische Maschine mit hohem Wirkungsgrad anzugeben, die für einen großen Drehzahlbereich ausgelegt ist.

Die Aufgabe wird durch eine elektrische Maschine mit den Merkmalen von Anspruch 1 gelöst.

Die elektrische Maschine, insbesondere der bürstenlose Gleichstrommotor, weist einen Rotor und einen mit stromführenden Wicklungen versehenen Stator auf. Der Rotor ist in Umfangsrichtung mit einer Vielzahl von Permanentmagneten bestückt, die jeweils in eine Magnetaufnahme zwischen Umfangsfläche und Welle des Rotors derart eingebettet sind, dass die Permanentmagnete in radialer Richtung vollständig von der Umfangsfläche des Rotors umfasst sind. An der Magnetaufnahme erstrecken sich in Umfangsrichtung des Rotors seitlich der Permanentmagnete Materialaussparungen axial innerhalb des Rotors. Auf diese Weise wird der magnetische Fluss im Rotoreisen um die Materialaussparungen herum geführt. Dies hat den Vorteil, dass sich der magnetische Fluss zwischen Rotor und Stator erhöht, wodurch bei Betrieb der elektrischen Maschine ein hoher Wirkungsgrad erzielt werden kann.

Insbesondere erstrecken sich die Materialaussparungen beiderseits der Magnetaufnahme. Auf diese Weise kann bei Rotation des Rotors sowohl bei Annäherung eines Permanentmagneten an einen Statorzahn, wie auch bei Entfernung des Permanentmagneten von dem Statorzahn eine symmetrische Verteilung des magnetischen Flusses erzielt werden. Des weiteren werden dadurch die über den Umfang des Rotors auftretenden Unterschiede der magnetischen Flussdichte zwischen Rotor und Stator verringert. Dies führt zu einem Drehmoment mit geringer Welligkeit, einem geringen Rastmoment und damit zu einer geringen Geräuschentwicklung auch bei hohen Drehzahlen des Rotors.

Gemäß einer bevorzugten Ausführungsform verlaufen die Materialaussparungen benachbart zur Umfangsfläche des Rotors. Dies hat den Vorteil, dass die verbleibende Wandstärke schnell durch den magnetischen Fluss gesättigt ist, insbesondere wenn die Wandstärke derart minimiert ist, dass sie den Fliehkräften der Permanentmagneten bei der höchst möglichen Drehzahl des Rotors gerade noch standhält.

Erfindungsgemäß ragt der in die Magnetaufnahme eingebettete Permanentmagnet zumindest mit seinen zur Umfangsfläche des Rotors benachbarten, axialen Kanten in die Materialaussparungen hinein. Auf diese Weise wird der magnetische Fluss in dem Rotoreisen zwischen Permanentmagnet und Umfangsfläche des Rotors, dem sogenannten Polschuh, erhöht, da der Permanentmagnet in Umfangsrichtung breiter ist als der Polschuhhals, und somit ein wesentlicher Teil der magnetischen Feldlinien, die von dem in die Materialaussparung hineinreichenden Teil des Permanentmagneten ausgehen, ihren Weg durch den Permanentmagneten bis hin zu dem Polschuh zurücklegen, bevor sie aus dem Permanentmagneten aus- und in das Rotoreisen eintreten.

Vorzugsweise münden die Materialaussparungen senkrecht auf einer zur Umfangsfläche des Rotors benachbarten Außenfläche des Permanentmagneten. Auf diese Weise kann der magnetische Fluss benachbart zu der Materialaussparung senkrecht aus der Außenfläche des Permanentmagneten aus- und in den Polschuh eintreten, wodurch die magnetische Flussdichte im Polschuh maximal wird, da der magnetische Fluss im Polschuhhals zunächst gebündelt und erst anschließend im Polschuhkopf wieder verteilt wird.

Vorteilhafterweise weisen die Materialaussparungen einen abgerundeten Übergang von einem Verlauf parallel zur Umfangsfläche des Rotors zu einem Verlauf senkrecht zur Außenfläche des Permanentmagneten auf. Auf diese Weise kann der magnetische Fluss in der verbleibenden Wandstärke zwischen Materialaussparung und Umfangsfläche des Rotors so geführt werden, dass der magnetische Fluss zwischen Rotor und Stator maximal und das Rastmoment minimal wird.

Erfindungsgemäß liegt der Permanentmagnet in Umfangsrichtung mit einer Teilbreite seiner Außenfläche an einem Polschuh des Rotors an, wobei insbesondere die Teilbreite einer Zahnschuhbreite eines Statorzahns in Umfangsrichtung wenigstens annähernd entspricht. Dies hat den Vorteil, dass der maximale magnetische Fluss zwischen Rotor und Stator auftreten kann, wenn der Permanentmagnet dem Statorzahn genau gegenübersteht, so dass ein hoher Wirkungsgrad erzielt werden kann.

Vorzugsweise sind durch die Materialaussparungen axial ausgedehnte Nasen an der Magnetaufnahme zur Halterung des Permanentmagneten ausgebildet. Auf diese Weise können die Permanentmagnete auf besonders einfache Weise in der Magnetaufnahme gehaltert werden.

Der Verzicht auf die Krümmung der Außenflächen der Magnete erlaubt es, diese wesentlich preiswerter herzustellen als herkömmliche Magnete mit kreissegmentförmigen Außenflächen. Im Idealfall sind die Magnete der erfindungsgemäßen Maschine einfach quaderförmig und mit ihren Schmalseiten in Umfangsrichtung angeordnet.

Gemäß einer bevorzugten Ausführungsform weist der Stator eine Vielzahl von Statorzähnen auf, deren zum Rotor benachbarte Endflächen ihres Zahnschuhs eben und tangential zur Umfangsfläche des Rotors ausgebildet sind. Dies hat den Vorteil, dass bei Betrieb der elektrischen Maschine ein Drehmoment mit einer besonders geringen Welligkeit erzielt werden kann. Aufgrund des damit verbundenen besonders niedrigen Rastmoments der elektrischen Maschine, führt dies zu einer geringen Geräuschent wicklung auch bei hohen Drehzahlen des Rotors und zu einem verbesserten Wirkungsgrad.

Vorzugsweise trägt jeder Statorzahn Windungen einer Einzelspule. Auf diese Weise ist die elektrische Maschine besonders effektiv und hinsichtlich des Materialeinsatzes kostengünstig und es treten nur geringe Streuverluste auf.

Um eine Maschine mit gutem Gleichlauf und geringer Geräuschentwicklung zu erhalten, stehen den acht Permanentmagneten des Rotors vorzugsweise zwölf Statorzähne und somit zwölf Einzelspulen des Stators gegenüber. Diese sind jeweils periodisch abwechselnd mit drei verschiedenen Phasen beschaltet. Es sind auch andere Anzahlen von Permanentmagneten und Statorzähnen möglich, bevorzugt im Verhältnis Anzahl der Permanentmagneten zu Anzahl der Statorzähne von zwei zu drei, von vier zu drei, von fünf zu sechs oder von sieben zu sechs.

Insbesondere sind die Permanentmagnete parallel zu ihren zu den Materialaussparungen gewandten Seitenflächen magnetisiert, wodurch sie besonders kostengünstig sind.

Bevorzugt sind Permanentmagnete hoher Koerzitivität bzw. Remanenz; vorzugsweise enthalten die Permanentmagnete Ferrite und/oder NdFeB und/oder Seltenen Erden. Insbesondere Permanentmagnete aus NdFeB weisen eine hohe Remanenz auf und haben ein günstiges Kosten-Materialmengenverhältnis.

Vorzugsweise sind die Permanentmagnete in axialer Richtung gleich lang oder länger als der Rotor, um Stirnstreueffekte auszugleichen.

Ein bevorzugtes Anwendungsgebiet der erfindungsgemäßen elektrischen Maschine sind Antriebe für Waschgeräte, insbesondere in Form von einem permanentmagnetischen Hybridmotor. Bei diesen Antrieben treten typischerweise Drehzahlen in der Größenordnung bis ca. 20.000 Umdrehungen pro Minute auf.

Die Materialaussparungen können zur Auswuchtung des Rotors mit nichtmagnetischen Materialien gefüllt werden.

Weitere Merkmale und Vorteile der Erfindung ergeben sich aus der nachfolgenden Beschreibung eines Ausführungsbeispiels mit Bezug auf die beigefügte Zeichnung. Es zeigen

Figur 1 einen Quadranten eines radialen Schnitts durch Stator und Rotor eines Ausführungsbeispiels der erfindungsgemäßen elektrischen Maschine und

Figur 2 einen vergrößerten Ausschnitt an einem Zahnschuh gemäß Figur 1.

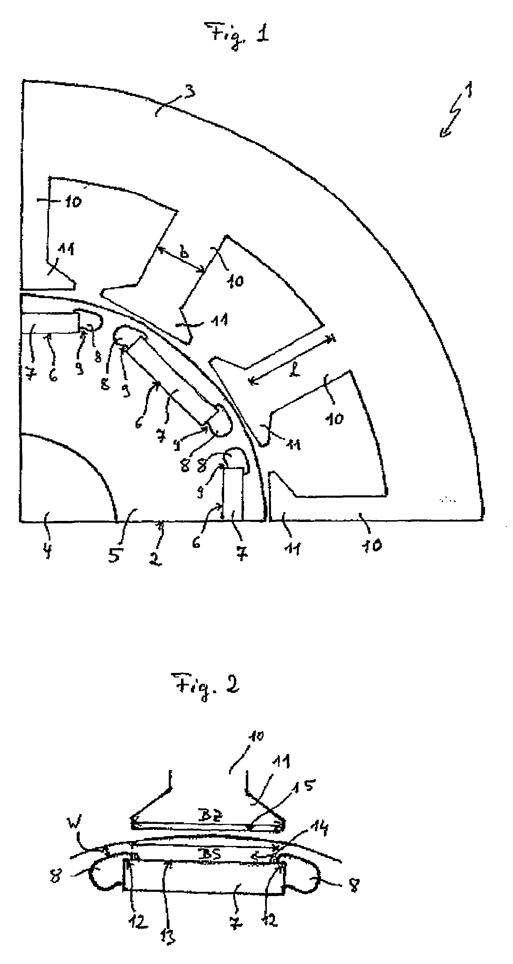

Gemäß der Zeichnung ist die elektrische Maschine 1 mit einem Rotor 2 und einem Stator 3 ausgebildet, wobei der Rotor 2 zur Übertragung eines Drehmoments auf einer Welle 4 gelagert ist. Der Rotor 2 setzt sich in axialer Richtung aus einem Blechpaket 5 aus identisch geformten Einzelblechen zusammen, die entsprechend des in Figur 1 gezeigten radialen Querschnitts ausgestaltet sind. Das Blechpaket 5 weist insgesamt acht Magnetaufnahmen 6 auf, die mit je einem Permanentmagneten 7 bestückt sind. Beidseitig an jeder der Magnetaufnahmen 6 ersteckt sich seitlich in Umfangsrichtung des Rotors 2 je eine Materialaussparung 8 axial durch das gesamte Blechpaket 5. Die Permanentmagnete 7 sind quaderförmig ausgestaltet und mit ihren Schmalseiten in Umfangsrichtung angeordnet. An den Materialaussparungen 8 sind Nasen 9 zur Halterung der Permanentmagnete 7 ausgebildet.

Der Stator 3 hat einen äußeren Rahmen, von dem sich radial nach innen zwölf Statorzähne 10 erstrecken, die an ihren Enden zu Zahnschuhen 11 verbreitert sind. Jeder der Statorzähne 10 trägt Drahtwicklungen einer Einzelspule (nicht gezeigt). Diese sind jeweils periodisch abwechselnd mit drei verschiedenen Phasen einer von einem elektronischen Wechselrichter gelieferten dreiphasigen Versorgungsspannung geschaltet. Die Breite b der Statorzähne 10 in Umfangsrichtung beträgt wenigstens ein Viertel ihrer axialen Länge 1, das heißt der Querschnitt der Statorzähne 10 ist vergleichsweise kompakt. Dadurch wird ein günstiges Verhältnis von gewickelter Drahtlänge beziehungsweise -masse zur Querschnittsfläche der Statorzähne 10 erzielt, und außerdem können die Wicklungen schnell hergestellt werden, da nur ein vergleichsweise geringer axialer Hub eines den Wicklungsdraht liefernden, beim Wickeln um die Wicklungskerne herumlaufenden Führungswerkzeugs erforderlich ist.

In Figur 2 ist ein vergrößerter Ausschnitt von Figur 1 gezeigt, wobei einer der Permanentmagnete 7 direkt gegenüber einem der Statorzähne 10 steht. Die Materialaussparungen 8 beidseitig der Magnetaufnahme 6 des Permanentmagneten 7 verlaufen benachbart zur Umfangsfläche des Rotors 2 parallel mit einer Wandstärke W. Der Permanentmagnet 7 ragt mit seinen dem Stator 3 zugewandten axialen Kanten 12 in die beidseitigen Materialaussparungen 8 hinein. Die Materialaussparungen 8 münden senkrecht auf einer zur Umfangsfläche des Rotors 2 benachbarten Außenfläche 13 des Permanentmagneten 7. Mit dieser Außenfläche 13 liegt der Permanentmagnet 7 an einem Polschuh 14 des Rotors 2 an. Der Statorzahn ist mit einer dem Rotor 2 zugewandten flachen Endfläche 15 des Zahnschuhs 11 ausgebildet. Diese Endfläche 15 weist eine Breite BZ in Umfangsrichtung auf, die einer Breite BS des Polschuhs 14 entspricht.

Der Rotor 2, der durch das Blechpaket 5 gebildet ist, weist eine axiale Länge auf, die geringfügig kleiner ist als die der Permanentmagnete 7. Die quaderförmigen Permanentmagnete 7 sind parallel magnetisiert und bestehen aus NdFeB. Typische Abmessungen der Permanentmagnete 7 für eine Anwendung in einer Waschmaschine bei einem Rotordurchmesser in der Größenordnung von 60 mm sind eine Höhe von ca. 2,5 mm, eine axiale Länge von ca. 2 bis 3 mm mehr als die axiale Länge des Blechpakets 5 und eine Kantenbreite in Umfangsrichtung im Bereich von 12 bis 16 mm, insbesondere von ca. 14 mm. Die Permanentmagnete 7 ragen mit ca. 5 Prozent ihrer Kantenbreite jeweils in eine der beidseitigen Materialaussparungen 8 hinein. Um bei typischen Rotordrehzahlen bis ca. 20.000 Umdrehungen pro Minute den Fliehkräften der Permanentmagnete standhalten zu können, beträgt die minimale Wandstärke W zwischen den Magnetaufnahmen 6 bzw. den Aussparungen 8 und der Umfangsfläche des Rotors 2 ca. 1,0 mm.

## Patentansprüche

1. Elektrische Maschine, insbesondere ein bürstenloser Gleichstrommotor, mit einem mit stromführenden Wicklungen versehenen Stator (3) und einem wenigstens teilweise magnetisierbaren Rotor (2), der in Umfangsrichtung mit einer Vielzahl von Permanentmagneten (7) bestückt ist, die jeweils in eine Magnetaufnahme (6) zwischen Umfangsfläche und Welle (4) des Rotors (2) derart eingebettet sind, dass die Permanentmagnete (7) in radialer Richtung vollständig von der Umfangsfläche des Rotors (2) umfasst sind, wobei die Permanentmagnete (7) quaderförmig und mit ihren Schmalseiten in Umfangsrichtung angeordnet sind, und wobei der Stator (3) eine Vielzahl von Statorzähnen (10) aufweist, deren dem Rotor (2) zugewandte Endflächen (15) ihres Zahnschuhs (11) eben und tangential zur Umfangsfläche des Rotors (2) ausgebildet sind, **dadurch gekennzeichnet, dass** sich an der Magnetaufnahme (6) seitlich in Umfangsrichtung des Rotors (2) Materialaussparungen (8) innerhalb des Rotors (2) derart axial erstrecken, dass der Permanentmagnet (7) zumindest mit seinen zur Umfangsfläche des Rotors (2) benachbarten, axialen Kanten (12) in die Materialaussparungen (8) hineinragt, so dass der Permanentmagnet (7) in Umfangsrichtung breiter ist als sein zugehöriger Polschuhhals (14) des Rotors (2) und mit einer Teilbreite (BS) seiner Außenfläche (13) an dem Polschuh (14) des Rotors (2) anliegt, und dass die Teilbreite (BS) einer Zahnschuhbreite (BZ) eines Statorzahns (10) in Umfangsrichtung entspricht.

2. Maschine nach Anspruch 1, **dadurch gekennzeichnet, dass** die Materialaussparungen (8) benachbart zur Umfangsfläche des Rotors (2) parallel mit einer Wandstärke (W) verlaufen, die derart minimiert ist, dass die Wandstärke (W) Fliehkräften der Permanentmagnete (7) bei der höchst möglichen Drehzahl des Rotors (2) noch standhält.

3. Maschine nach Anspruch 1 oder 2, **dadurch gekennzeichnet, dass** die Materialaussparungen (8) senkrecht auf einer zur Umfangsfläche des Rotors (2) benachbarten Außenfläche (13) des Permanentmagneten (7) münden, mit der der Permanentmagnet (7) an dem Polschuh (14) des Rotors (2) anliegt.

4. Maschine nach Anspruch 3, **dadurch gekennzeichnet, dass** die Materialaussparungen (8) einen abgerundeten Übergang von einem Verlauf parallel zur Umfangsfläche des Rotors (2) zu einem Verlauf senkrecht zur Außenfläche (13) des Permanentmagneten (7) aufweisen.

5. Maschine nach einem der vorhergehenden Ansprüche, **dadurch gekennzeichnet, dass** durch die Materialaussparungen (8) axial ausgedehnte Nasen (9) an der Magnetaufnahme (6) zur Halterung des Permanentmagneten (7) ausgebildet sind.

6. Maschine nach einem der vorhergehenden Ansprüche, **dadurch gekennzeichnet, dass** jeder Statorzahn (10) Windungen einer Einzelspule trägt.

7. Maschine nach einem der vorhergehenden Ansprüche, **dadurch gekennzeichnet, dass** die elektrische Maschine (1) mit acht Permanentmagneten (7) und zwölf Statorzähnen (10) ausgebildet ist.

8. Maschine nach einem der vorhergehenden Ansprüche, **dadurch gekennzeichnet, dass** die Permanentmagnete (7) parallel zu ihren zu den Materialaussparungen (8) gewandten Seitenflächen magnetisiert sind.

9. Maschine nach einem der vorhergehenden Ansprüche, **dadurch gekennzeichnet, dass** die Permanentmagnete (7) Ferrite und/oder NdFeB und/oder Seltenen Erden enthalten.

10. Maschine nach einem der vorhergehenden Ansprüche, **dadurch gekennzeichnet, dass** die Permanentmagnete (7) in axialer Richtung gleich lang oder länger als der Rotor (2, 5) sind.

## Claims

1. Electric machine, particularly a brushless direct current motor, with a stator (3), which is provided with current-conducting windings, and an at least partly magnetisable rotor (2), which is equipped in circumferential direction with a plurality of permanent magnets (7) respectively embedded in a magnet receptacle (6) between circumferential surface and shaft (4) of the rotor (2) in such a manner that the permanent magnets (7) are embraced in radial direction completely by the circumferential surface of the rotor (2), wherein the permanent magnets (7) are block-shaped and are arranged with the narrow sides thereof in circumferential direction, and wherein the stator (3) has a plurality of stator teeth (10), the end surfaces (15) - which face the rotor (2) - of which of its tooth shoe (11) are formed to be planar and tangential to the circumferential surface of the rotor (2), **characterised in that** material cut-outs (8) within the rotor (2) extend axially at the magnet receptacle (6) laterally in circumferential direction of the rotor (2) in such a manner that the permanent magnet (7) projects at least by its axial edges (12), which are adjacent to the circumferential surface of the rotor (2), into the material cut-outs (8) so that the permanent magnet (7) is wider in circumferential direction than its associated pole shoe neck (14) of the rotor (2) and bears by a part width (BS) of its outer surface (13) against the pole shoe (14) of the rotor (2), and that the part width (BS) corresponds with a tooth shoe width (BZ) of a stator tooth (10) in circumferential direction.

2. Machine according to claim 1, **characterised in that** the material cut-outs (8) extend adjacent to the circumferential surface of the rotor (2) parallelly with a wall thickness (W) which is minimised in such a manner that the wall thickness (W) still withstands centrifugal forces of the permanent magnets (7) at the highest possible rotational speed of the rotor (2).

3. Machine according to claim 1 or 2, **characterised in that** the material cut-outs (8) open perpendicularly onto an outer surface (13), which is adjacent to the circumferential surface of the rotor (3) and by which the permanent magnet (7) bears against the pole shoe (14) of the rotor (2), of the permanent magnet (7).

4. Machine according to claim 3, **characterised in that** the material cut-outs (8) have a radiused transition from a course parallel to the circumferential surface of the rotor (2) to a course perpendicular to the outer surface (13) of the permanent magnet (7).

5. Machine according to any one of the preceding claims, **characterised in that** lugs (9) axially extended by the material cut-outs (8) are formed at the magnet receptacle (6) for mounting the permanent magnet (7).

6. Machine according to any one of the preceding claim, **characterised in that** each stator tooth (10) carries windings of an individual coil.

7. Machine according to any one of the preceding claims, **characterised in that** the electric machine (1) is constructed with eight permanent magnets (7) and twelve stator teeth (10).

8. Machine according to any one of the preceding claims, **characterised in that** the permanent magnets (7) are magnetised parallel to the side surfaces thereof facing the material cut-outs.

9. Machine according to any one of the preceding claims, **characterised in that** the permanent magnets (7) contain ferrites and/or NdFeB and/or rare earths.

10. Machine according to any one of the preceding claims, **characterised in that** the permanent magnets (7) in axial direction are the same length as or longer than the rotor (2, 5).

## Revendications

1. Machine électrique, plus particulièrement un moteur à courant continu sans balais, comprenant un stator (3) pourvu d'enroulements parcourus par le courant et un rotor (2) au moins partiellement magnétisable et qui est équipé d'une pluralité d'aimants permanents (7) dans le sens circonférentiel, lesquels sont encastrés chacun dans un logement d'aimant (6) entre la surface circonférentielle et l'arbre (4) du rotor (2) de sorte que les aimants permanents (7) sont entièrement enveloppés par la surface circonférentielle du rotor (2) dans le sens radial, lesdits aimants permanents (7) ayant une forme parallélépipédique et étant disposés avec leurs côtés étroits dans le sens circonférentiel, et ledit stator (3) présentant une pluralité de dents de stator (10), dont les faces d'extrémité (15) orientées vers le rotor (2) de leur pièce de dent (11) sont planes et tangentielles à la surface circonférentielle du rotor (2), **caractérisée en ce que** sur les côtés dudit logement d'aimant (6), dans le sens circonférentiel du rotor (2), des évidements de matière (8) s'étendent axialement à l'intérieur du rotor (2) de façon à ce que l'aimant permanent (7) pénètre dans lesdits évidements de matière (8) au moins avec ses bords axiaux (12) adjacents à la surface circonférentielle du rotor (2), l'aimant permanent (7) étant ainsi plus large dans le sens circonférentiel que le col de pièce polaire (14) associé du rotor (2) et prenant appui sur la pièce polaire (14) du rotor (2) avec une largeur partielle (BS) de sa surface extérieure (13), et **en ce que** ladite largeur partielle (BS) correspond à une largeur de pièce de dent (BZ) d'une dent de stator (10) dans le sens circonférentiel.

2. Machine selon la revendication 1, **caractérisée en ce que** les évidements de matière (8) adjacents à la surface circonférentielle du rotor (2) s'étendent en parallèle avec une épaisseur de paroi (W), laquelle est minimisée de telle façon que ladite épaisseur de paroi (W) résiste encore à des forces centrifuges des aimants permanents (7) à la plus grande vitesse possible du rotor (2).

3. Machine selon la revendication 1 ou 2, **caractérisée en ce que** les évidements de matière (8) débouchent verticalement sur une surface extérieure (13) adjacente à la surface circonférentielle du rotor (2) de l'aimant permanent (7), avec laquelle l'aimant permanent (7) est adjacent à la pièce polaire (14) du rotor (2).

4. Machine selon la revendication 3, **caractérisée en ce que** les évidements de matière (8) présentent une transition arrondie entre un tracé parallèle à la surface circonférentielle du rotor (2) et un tracé perpendiculaire à la surface extérieure (13) de l'aimant permanent (7).

5. Machine selon l'une des revendications précédentes, **caractérisée en ce que** des nez (9) d'extension axiale sont formés par les évidements de matière (8) sur le logement d'aimant (6), destinés à la fixation de l'aimant permanent (7).

6. Machine selon l'une des revendications précédentes, **caractérisée en ce que** chaque dent de stator (10) porte des enroulements d'une bobine élémentaire.

7. Machine selon l'une des revendications précédentes, **caractérisée en ce que** la machine électrique (1) est réalisée avec huit aimants permanents (7) et douze dents de stator (10).

8. Machine selon l'une des revendications précédentes, **caractérisée en ce que** les aimants permanents (7) sont magnétisés parallèlement à leurs surfaces latérales orientées vers les évidements de matière (8).

9. Machine selon l'une des revendications précédentes, **caractérisée en ce que** les aimants permanents (7) contiennent des ferrites et/ou du NdFeB et/ou des terres rares.

10. Machine selon l'une des revendications précédentes, **caractérisée en ce que** les aimants permanents (7) sont de même longueur ou plus longs que le rotor (2, 5) dans le sens axial.
